# EUROPEAN PATENT APPLICATION

(11) **EP 4 625 110 A1**
(43) Date of publication of application: **01.10.2025**
(21) Application number: 25150313.2
(22) Date of filing: 06.01.2025
(51) Int. Cl.: G06F 1/3206, G06F 1/3234, G06F 1/30

(54) **DYNAMIC FABRIC QUIESCENCE**

(30) Priority: 25.03.2024 US 202418615994
(71) Applicant: Altera Corporation, San Jose, CA 95134 (US)
(72) Inventor: FEEKES, Dannie, Corvallis, 97330 (US); LIM, Teik Wah, 11900 Bayan Lepas (MY)
(74) Representative: Viering, Jentschura & Partner mbB Patent- und Rechtsanwälte

(57) **Abstract**

An integrated circuit includes a network-on-chip and a core fabric coupled to the network-on-chip. Additionally, the integrated circuit also includes a voltage regulator configured to regulate a voltage rail to the core fabric. Furthermore, the integrated circuit includes a power management processor that is configured to control whether power is provided to the core fabric from the voltage regulator via the voltage rail. Moreover, the power management processor is configured to fence and drain the network-on-chip by causing the network-on-chip to deliver inflight transactions to and from the core fabric before a change in power provided to the core fabric via the voltage rail occurs.

## Description

### BACKGROUND

The present disclosure relates generally to power management, and more specifically to dynamic programmable fabric quiescence for reduced power operation.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

An integrated circuit such as a field programmable gate array (FPGA) may include some programmable fabrics that may vary from implementation to implementation and within different subsystems of the FPGA. When the integrated circuit is to be shut down, inflight transactions between subsystems and/or the fabric of the FPGA may be dropped.

### BRIEF DESCRIPTION OF THE DRAWINGS

Various aspects of this disclosure may be better understood upon reading the following detailed description and upon reference to the drawings in which:
FIG. 1 is a block diagram of a system used to program an integrated circuit device, in accordance with an embodiment of the present disclosure;
FIG. 2 is a block diagram of the integrated circuit device of FIG. 1, in accordance with an embodiment of the present disclosure;
FIG. 3 is a block diagram of programmable fabric of the integrated circuit device of FIG. 1, in accordance with an embodiment of the present disclosure;
FIG. 4 is a block diagram of an integrated circuit with a network-on-a-chip ("NoC") architecture, in accordance with aspects of the present disclosure;
FIG. 5 is a block diagram of drain logic circuitry, in accordance with aspects of the present disclosure;
FIG. 6 is a block diagram of isolation circuitry, in accordance with aspects of the present disclosure;
FIG. 7 is a block diagram of an example implementation of the isolation circuitry of FIG. 6 within the NoC architecture of FIG. 1, in accordance with aspects of the present disclosure;
FIG. 8 is a block diagram of an example implementation of monolithic programmable fabric quiescence within the NoC architecture of FIG. 4, in accordance with aspects of the present disclosure;
FIG. 9 is a block diagram of an example implementation of multi-die programmable fabric quiescence within the NoC architecture of FIG. 4, in accordance with aspects of the present disclosure;
FIG. 10 is a workflow diagram that shows an example implementation of dynamic programmable fabric quiescence within the NoC architecture of FIG. 4, in accordance with aspects of the present disclosure;
FIG. 11 is a flow diagram that illustrates a process of dynamic programmable fabric quiescence, in accordance with aspects of the present disclosure; and
FIG. 12 is a block diagram of a data processing system including the integrated circuit device of FIG. 1, in accordance with an embodiment of the present disclosure.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

As previously noted, dropping inflight transactions between subsystems and a programmable fabric core of a field-programmable gate array (FPGA) may be risked when the FPGA is shut down. As discussed below, a network-on-chip (NOC) may be used to provide fence and drain functionality to resolve and quiesce fabric and subsystem traffic to enable the fabric to ensure that shut down occurs after inflight transactions have been resolved. Additionally or alternatively, the NOC may be used to prevent new transactions to be issued during the quiescence process. Furthermore, by using the NOC to perform such quiescence, the user may not be required to keep track of inflight transactions and/or without the user being required to provide a control mechanism to the subsystems to prevent new transactions from being received before allowing the FPGA to enter into a power down state. In other words, the traffic control for the subsystems may be simplified for power management implementation thereby reducing the potential for error and/or dropped inflight transactions due to a power shut down.

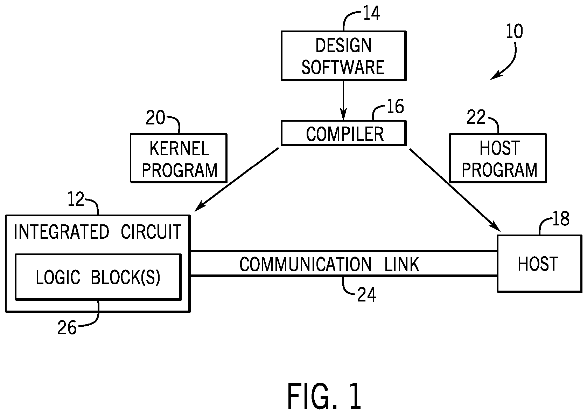

With the foregoing in mind, FIG. 1 illustrates a block diagram of a system 10 that may implement one or more functionalities. For example, a designer may desire to implement functionality, such as the operations of this disclosure, on an integrated circuit device 12 (e.g., a programmable logic device, such as a field programmable gate array (FPGA) or an application specific integrated circuit (ASIC)). In some cases, the designer may specify a high-level program to be implemented, such as an OpenCL^{®} program or SYCL^{®}, which may enable the designer to more efficiently and easily provide programming instructions to configure a set of programmable logic cells for the integrated circuit device 12 without specific knowledge of low-level hardware description languages (e.g., Verilog or VHDL). For example, since OpenCL^{®} is quite similar to other high-level programming languages, such as C++, designers of programmable logic familiar with such programming languages may have a reduced learning curve than designers that are required to learn unfamiliar low-level hardware description languages to implement new functionalities in the integrated circuit device 12.

The designer may implement high-level designs using design software 14, such as a version of INTEL^{®} QUARTUS^{®} by INTEL CORPORATION. The design software 14 may use a compiler 16 to convert the high-level program into a lower-level description. In some embodiments, the compiler 16 and the design software 14 may be packaged into a single software application. The compiler 16 may provide machine-readable instructions representative of the high-level program to a host 18 and the integrated circuit device 12. The host 18 may receive a host program 22 which may be implemented by the kernel programs 20. To implement the host program 22, the host 18 may communicate instructions from the host program 22 to the integrated circuit device 12 via a communications link 24, which may be, for example, direct memory access (DMA) communications or peripheral component interconnect express (PCIe) communications. In some embodiments, the kernel programs 20 and the host 18 may enable configuration of one or more logic circuitry 26 on the integrated circuit device 12. The logic circuitry 26 may include circuitry and/or other logic elements and may be configured to implement arithmetic operations, such as addition and multiplication.

The designer may use the design software 14 to generate and/or to specify a low-level program, such as the low-level hardware description languages described above. For example, the design software 14 may be used to map a workload to one or more routing resources of the integrated circuit device 12 based on a timing, a wire usage, a logic utilization, and/or a routability. Additionally or alternatively, the design software 14 may be used to route first data to a portion of the integrated circuit device 12 and route second data, power, and clock signals to a second portion of the integrated circuit device 12. Further, in some embodiments, the system 10 may be implemented without a host program 22 and/or without a separate host program 22. Moreover, in some embodiments, the techniques described herein may be implemented in circuitry as a non-programmable circuit design. Thus, embodiments described herein are intended to be illustrative and not limiting.

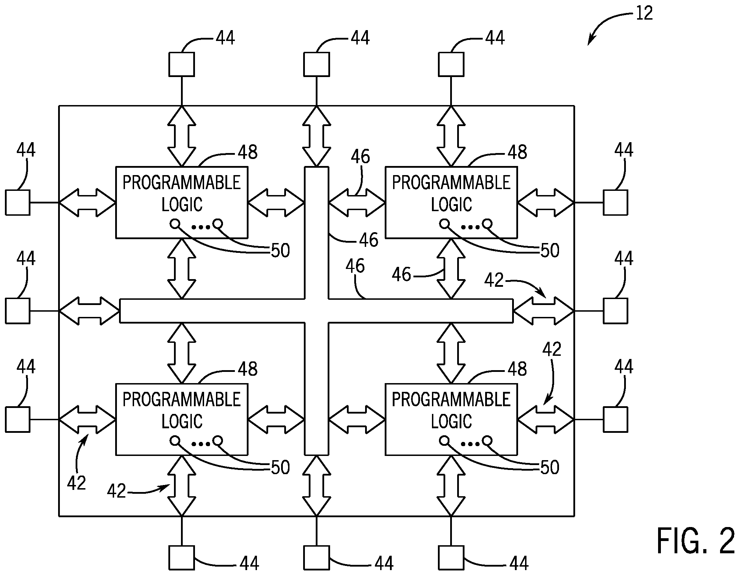

Turning now to a more detailed discussion of the integrated circuit device 12, FIG. 2 is a block diagram of an example of the integrated circuit device 12 as a programmable logic device, such as a field-programmable gate array (FPGA). Further, it should be understood that the integrated circuit device 12 may be any other suitable type of programmable logic device (e.g., a structured ASIC such as eASIC^{™} by Intel Corporation and/or application-specific standard product). The integrated circuit device 12 may have input/output circuitry 42 for driving signals off the device and for receiving signals from other devices via input/output pins 44. Interconnection resources 46, such as global and local vertical and horizontal conductive lines and buses, and/or configuration resources (e.g., hardwired couplings, logical couplings not implemented by designer logic), may be used to route signals on integrated circuit device 12. Additionally, interconnection resources 46 may include fixed interconnects (conductive lines) and programmable interconnects (i.e., programmable connections between respective fixed interconnects). For example, the interconnection resources 46 may be used to route signals, such as clock or data signals, through the integrated circuit device 12. Additionally or alternatively, the interconnection resources 46 may be used to route power (e.g., voltage) through the integrated circuit device 12. Programmable logic 48 may include combinational and sequential logic circuitry. For example, programmable logic 48 may include look-up tables, registers, and multiplexers. In various embodiments, the programmable logic 48 may be configured to perform a custom logic function. The programmable interconnects associated with interconnection resources may be considered to be a part of programmable logic 48.

Programmable logic devices, such as the integrated circuit device 12, may include programmable elements 50 with the programmable logic 48. In some embodiments, at least some of the programmable elements 50 may be grouped into logic array blocks (LABs). As discussed above, a designer (e.g., a user, a customer) may (re)program (e.g., (re)configure) the programmable logic 48 to perform one or more desired functions. By way of example, some programmable logic devices may be programmed or reprogrammed by configuring programmable elements 50 using mask programming arrangements, which is performed during semiconductor manufacturing. Other programmable logic devices are configured after semiconductor fabrication operations have been completed, such as by using electrical programming or laser programming to program the programmable elements 50. In general, programmable elements 50 may be based on any suitable programmable technology, such as fuses, anti-fuses, electrically programmable read-only-memory technology, random-access memory cells, mask-programmed elements, and so forth.

Many programmable logic devices are electrically programmed. With electrical programming arrangements, the programmable elements 50 may be formed from one or more memory cells. For example, during programming, configuration data is loaded into the memory cells using input/output pins 44 and input/output circuitry 42. In one embodiment, the memory cells may be implemented as random-access-memory (RAM) cells. The use of memory cells based on RAM technology as described herein is intended to be only one example. Further, since these RAM cells are loaded with configuration data during programming, they are sometimes referred to as configuration RAM cells (CRAM). These memory cells may each provide a corresponding static control output signal that controls the state of an associated logic component in programmable logic 48. In some embodiments, the output signals may be applied to the gates of metal-oxide-semiconductor (MOS) transistors within the programmable logic 48.

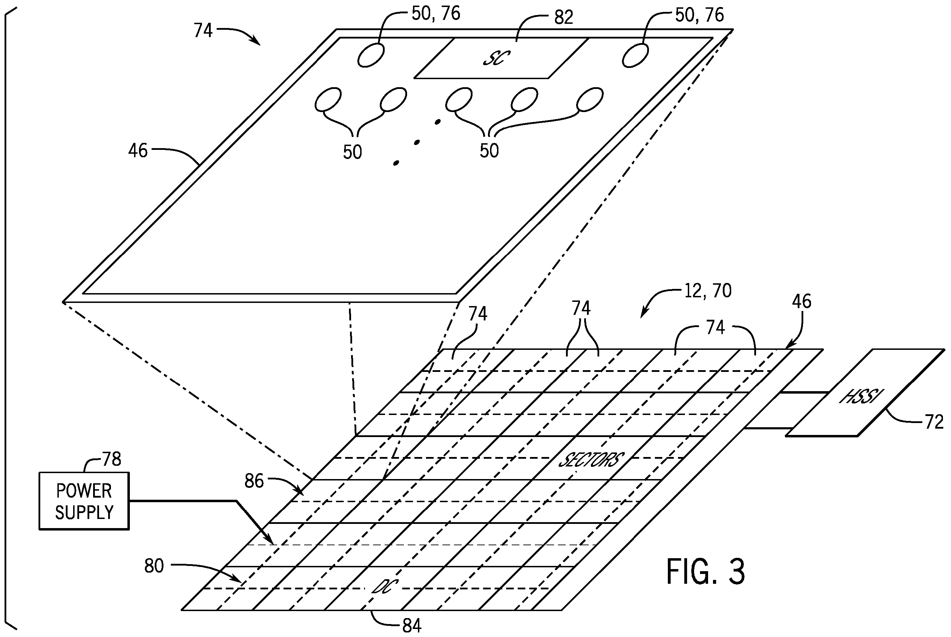

The integrated circuit device 12 may include any programmable logic device such as a field programmable gate array (FPGA) 70, as shown in FIG. 3. For the purposes of this example, the FPGA 70 is referred to as a FPGA, though it should be understood that the device may be any suitable type of programmable logic device (e.g., an application-specific integrated circuit and/or application-specific standard product). In one example, the FPGA 70 is a sectorized FPGA of the type described in U.S. Patent Publication No. 2016/0049941, "Programmable Circuit Having Multiple Sectors," which is incorporated by reference in its entirety for all purposes. The FPGA 70 may be formed on a single plane. Additionally or alternatively, the FPGA 70 may be a three-dimensional FPGA having a base die and a fabric die of the type described in U.S. Patent No. 10,833,679, "Multi-Purpose Interface for Configuration Data and Designer Fabric Data," which is incorporated by reference in its entirety for all purposes.

In the example of FIG. 3, the FPGA 70 may include transceiver 72 that may include and/or use input/output circuitry, such as input/output circuitry 42 in FIG. 2, for driving signals off the FPGA 70 and for receiving signals from other devices. Interconnection resources 46 may be used to route signals, such as clock or data signals, through the FPGA 70. The FPGA 70 is sectorized, meaning that programmable logic resources may be distributed through a number of discrete programmable logic sectors 74. Programmable logic sectors 74 may include a number of programmable elements 50 having operations defined by configuration memory 76 (e.g., CRAM). A power supply 78 may provide a source of voltage (e.g., supply voltage) and current to a power distribution network (PDN) 80 that distributes electrical power to the various components of the FPGA 70. Operating the circuitry of the FPGA 70 causes power to be drawn from the power distribution network 80.

There may be any suitable number of programmable logic sectors 74 on the FPGA 70. Indeed, while 29 programmable logic sectors 74 are shown here, it should be appreciated that more or fewer may appear in an actual implementation (e.g., in some cases, on the order of 50, 100, 500, 1000, 5000, 10,000, 50,000 or 100,000 sectors or more). Programmable logic sectors 74 may include a sector controller (SC) 82 that controls operation of the programmable logic sectors 74. Sector controllers 82 may be in communication with a device controller (DC) 84.

Sector controllers 82 may accept commands and data from the device controller 84 and may read data from and write data into its configuration memory 76 based on control signals from the device controller 84. In addition to these operations, the sector controller 82 may be augmented with numerous additional capabilities. For example, such capabilities may include locally sequencing reads and writes to implement error detection and correction on the configuration memory 76 and sequencing test control signals to effect various test modes.

The sector controllers 82 and the device controller 84 may be implemented as state machines and/or processors. For example, operations of the sector controllers 82 or the device controller 84 may be implemented as a separate routine in a memory containing a control program. This control program memory may be fixed in a read-only memory (ROM) or stored in a writable memory, such as random-access memory (RAM). The ROM may have a size larger than would be used to store only one copy of each routine. This may allow routines to have multiple variants depending on "modes" the local controller may be placed into. When the control program memory is implemented as RAM, the RAM may be written with new routines to implement new operations and functionality into the programmable logic sectors 74. This may provide usable extensibility in an efficient and easily understood way. This may be useful because new commands could bring about large amounts of local activity within the sector at the expense of only a small amount of communication between the device controller 84 and the sector controllers 82.

Sector controllers 82 thus may communicate with the device controller 84, which may coordinate the operations of the sector controllers 82 and convey commands initiated from outside the FPGA 70. To support this communication, the interconnection resources 46 may act as a network between the device controller 84 and sector controllers 82. The interconnection resources 46 may support a wide variety of signals between the device controller 84 and sector controllers 82. In one example, these signals may be transmitted as communication packets.

The use of configuration memory 76 based on RAM technology as described herein is intended to be only one example. Moreover, configuration memory 76 may be distributed (e.g., as RAM cells) throughout the various programmable logic sectors 74 of the FPGA 70. The configuration memory 76 may provide a corresponding static control output signal that controls the state of an associated programmable element 50 or programmable component of the interconnection resources 46. The output signals of the configuration memory 76 may be applied to the gates of metal-oxide-semiconductor (MOS) transistors that control the states of the programmable elements 50 or programmable components of the interconnection resources 46.

The programmable elements 50 of the FPGA 40 may also include some signal metals (e.g., communication wires) to transfer a signal. In an embodiment, the programmable logic sectors 74 may be provided in the form of vertical routing channels (e.g., interconnects formed along a y-axis of the FPGA 70) and horizontal routing channels (e.g., interconnects formed along an x-axis of the FPGA 70), and each routing channel may include at least one track to route at least one communication wire. If desired, communication wires may be shorter than the entire length of the routing channel. That is, the communication wire may be shorter than the first die area or the second die area. A length L wire may span L routing channels. As such, a length of four wires in a horizontal routing channel may be referred to as "H4" wires, whereas a length of four wires in a vertical routing channel may be referred to as "V4" wires.

As discussed above, some embodiments of the programmable logic fabric may be configured using indirect configuration techniques. For example, an external host device may communicate configuration data packets to configuration management hardware of the FPGA 70. The data packets may be communicated internally using data paths and specific firmware, which are generally customized for communicating the configuration data packets and may be based on particular host device drivers (e.g., for compatibility). Customization may further be associated with specific device tape outs, often resulting in high costs for the specific tape outs and/or reduced scalability of the FPGA 70.

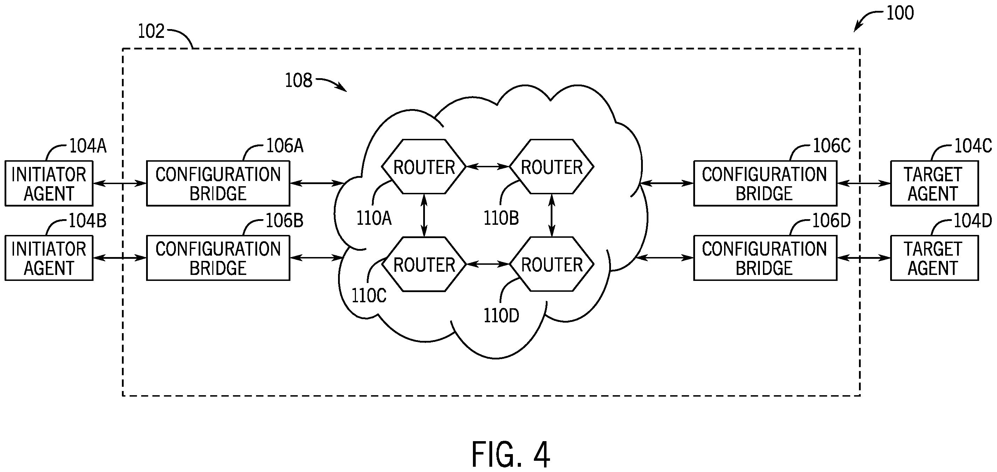

As discussed below, in an embodiment, a network-on-chip (NOC) of the FPGA may provide fence and drain functionality in the FPGA NOC. For instance, the FPGA NOC may use hardened circuitry and/or at least some logic implemented in the programmable fabric of the FPGA. It is important to note that storing and tracking inflight transactions between the hard circuitry and the FPGA programmable logic can be provided through various different implementations. FIG. 4 is a diagram of an embodiment of a system 100 that includes a NOC 102 that couples to agents 104 (individually referred to as 104A, 104B, 104C, and 104D). Some of the agents 104 (e.g., agents 104A and 104B) may be initiator agents that send data into the NOC 102 to other agents (e.g., agents 104C and 104D) that are targets of the communication. The agents 104 may include some logic implemented in the programmable fabric of the FPGA 70. In some embodiments, at least some of the agents 104 may act as both an initiator and a target. Each agent 104 couples to configuration bridges 106 (individually referred to as configuration bridges 106A, 106B, 106C, and 106D). TheNOC 102 includes routing circuitry 108 that includes routers 110 (individually referred to as routers 110A, 110B, 110C, and 110D). The routing circuitry 108 may include the actual circuitry (e.g., trace, wires, etc) and the routers 110 to perform routing of data in the NOC 102. The routers 110 may include routing components, such a multiplexers, buffers, logic gates, and/or any other suitable circuitry that may be used to selectively route data through the NOC 102.

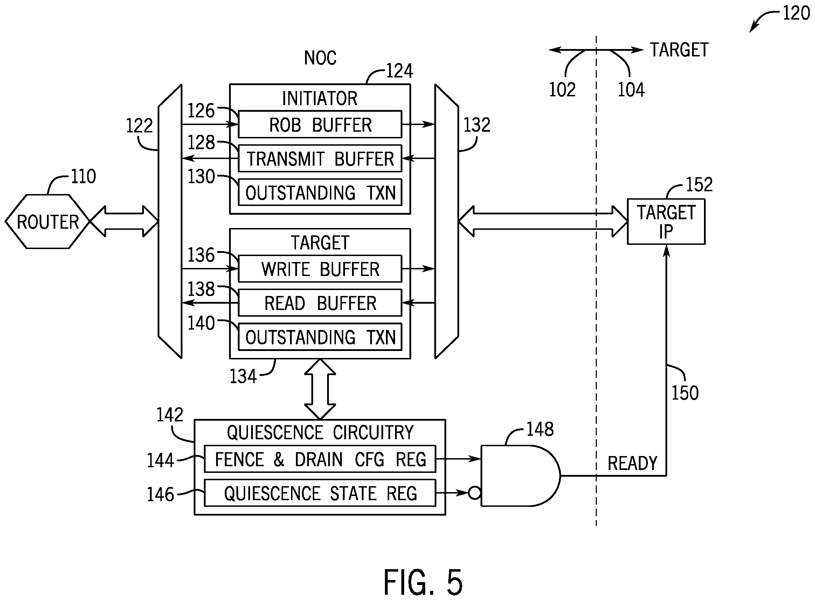

As discussed below, the NOC 102 may be used to implement a fence and drain functionality that, when queued by an external source, causes the removal of a READY signal to all devices (e.g., agents 104) communicating on the NOC 102 preventing them from issuing new requests. As discussed below, the NOC 102 may maintain a list of all outstanding transactions. The NOC 102 may also provide a status register to indicate when all outstanding transactions have completed. For instance, FIG. 5 is a diagram of a system 120 that includes the NOC 102 and a target agent 104. As illustrated, the NOC 102 includes routing circuitry 122 (e.g., multiplexer and/or demultiplexer) that routes data to and from the router 110. Initiator circuitry 124 may be used to transmit data from an agent acting as an initiator. The initiator circuitry 124 includes a read buffer 126 that may be used to buffer data for transmittal to the agent 104 acting as an initiator and a transmit buffer that is used to buffer data transmitted from the agent 104 acting as an initiator. The initiator circuitry 124 also includes an outstanding transmission buffer 130 that is used to track whether any outstanding initiator messages are still to be delivered. The NOC 102 also includes routing circuitry 132 (e.g., multiplexer and/or demultiplexer) that routes data to and from the agent 104.

The NOC 102 also includes target circuitry 134 may be used to transmit data from an agent acting as a target. The target circuitry 134 includes a write buffer 136 that may be used to buffer data for transmittal to the agent 104 acting as a target and a read buffer 138 that is used to buffer data transmitted from the agent 104 acting as a target. The target circuitry 134 also includes an outstanding transmission buffer 140 that is used to track whether any outstanding target messages are still to be delivered.

The NOC 102 also includes quiescence circuitry 142 that is used to control whether the target agent 104 is able to send new messages. For instance, the quiescence circuitry 142 includes fence and drain configuration registers 144 and an initiator quiescence state register 146. The fence and drain configuration registers 144 may be used to enable and/or set different settings for which fence and drain functionality is to occur and/or how the fence and drain functionality is to occur. The quiescence state register 146 indicates a state (e.g., shutdown initiated) for the FPGA 70 indicating whether quiescence is to occur. The NOC 102 includes a logic gate 148 that receives outputs from the fence and drain configuration register 144 and the quiescence state register 146. When the outputs from the fence and drain configuration register 144 and the quiescence state register 146 indicate that fence and drain is not to occur, the logic gate 148 outputs a READY signal 150 that enables an implementation of target IP 152 in the programmable fabric of the agent 104. The target IP 152 may be a portion of a user logic implementation in the FPGA 70, such as implemented logic within a partition of the FPGA 70. For example, when the fence and drain configuration register 144 indicates enablement of fence and drain functionality when the state indicated in the quiescence state register 146 is active, the logic gate 148 disables the READY signal 150 due to an inversion of the output of the quiescence state register 146.

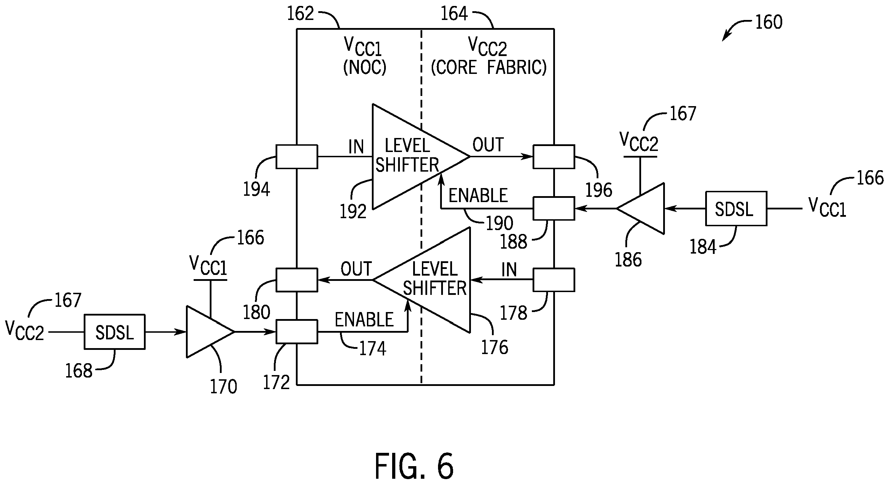

The NOC 102 leverages this fence and drain functionality to enable the shutdown of core fabric power islands by providing proper data completion, credit maintenance, and memory coherency management. Furthermore, hardware and/or software in the NOC 102 may enable the user to isolate the interfaces between the fabric and the subsystem IP on the NOC 102. This capability enables a customer to ensure a known and stable state of the interfaces between the core fabric once the user removes the core fabric power after the NOC 102 is quiesced. For instance, FIG. 6 shows a diagram of an auto isolation circuit at the NOC/initiator interface which will electrically isolate the initiator from the NOC upon detection of the initiator power down.

Since the voltage levels used and/or the logic implemented in the FPGA 70 may vary by user and/or configuration, the different implementations and/or other circuitry of the FPGA 70 and/or other agents may be isolated from each other. In some embodiments, the NOC 102 may include interface isolation circuitry to provide electrical isolation between the portions of the FPGA 70 (e.g., NOC 102) and/or connected agents 104. For example, the isolation circuitry may isolate a high-speed IO (HSIO) control unit of the FPGA 70 from a DRAM controller. In this example, the power management controller will signal the HSIO to put the DRAM into self-refresh and assert an external IO isolation. Upon completion of the isolation and NOC quiescence, the fabric core may be powered down.

FIG. 6 is a schematic diagram of an embodiment of the isolation circuitry 160. The isolation circuitry 160 provides a transition between a first power domain 162 and a second power domain 164. The first power domain 162 utilizes a first voltage 166, and the second power domain utilizes a second voltage 167. The isolation circuitry 160 includes a self-deterministic level shifter (SDSL) 168 that determines the output (e.g., 0V) of the SDSL 168 when the second voltage 167 is removed or drops to 0V. The output of the SDSL 168 is transmitted to an amplifier 170 that uses the first voltage 166 to control whether the amplifier 170 is active. In some embodiments, the amplifier 170 may amplify the output of the SDSL 168 using some amplification factor that is greater than or equal to one (e.g., unity gain amplifier). Alternatively, the amplifier 170 may be replaced by and/or used as an attenuator. The output of the amplifier 170 is transmitted via a connection 172 as an enable signal 174 that is used to enable a level shifter 176 to be active. The level shifter 176 receives an input signal at an input 178 that is based on the second voltage 167 and shifts the input signal to an appropriate level based on the first voltage 166 corresponding as an output signal to an output 180.

The isolation circuitry 160 also includes an SDSL 184 that determines the output (e.g., 0V) of the SDSL 184 when the first voltage 166 is removed or drops to 0V. The output of the SDSL 184 is transmitted to an amplifier 186 that uses the second voltage 167 to control whether the amplifier 186 is active. In some embodiments, the amplifier 186 may amplify the output of the SDSL 184 using some amplification factor that is greater than or equal to one (e.g., unity gain amplifier). Alternatively, the amplifier 186 may be replaced and/or used as an attenuator. The output of the amplifier 186 is transmitted via a connection 188 as an enable signal 190 that is used to enable a level shifter 192 to be active. The level shifter 192 receives an input signal at an input 194 that is based on the first voltage 166 and shifts the input signal to an appropriate level based on the second voltage 167 corresponding as an output signal to an output 196.

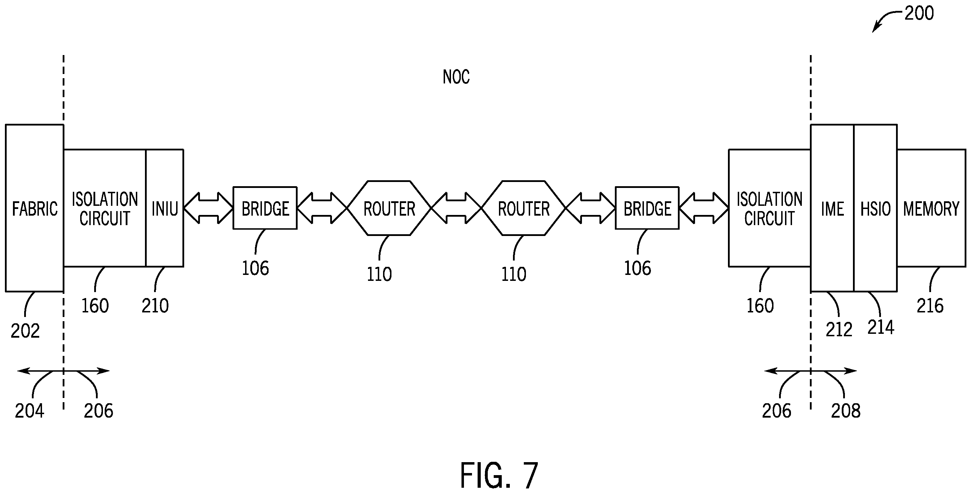

FIG. 7 is a block diagram of a system 200 that includes a fabric 202 of an initiator agent 204 and a NOC 206 (as an embodiment of the NOC 102) and a target agent 208. The NOC 206 includes isolation circuitry 160 and an initiator network interface unit (InIU) 210 used to interface the fabric 202 as the initiator for the communication. The NOC 206 also includes configuration bridges 106 for the initiator agent 204 and the target agent 208. The NOC 206 also includes routers 110 for the initiator agent 204 and the target agent 208. As illustrated, the target agent 208 includes an inline memory encryption (IME) engine 212, an HSIO 214, and memory 216 where data is stored. The IME engine 212 may be implemented using hardware circuitry and/or software.

The foregoing implementation of fence and drain functionality is key in a programmable device due to the fact that the device resources are configurable. This reconfigurability differs from traditional ASIC and SOC's. An FPGA provides logic functionality and IO resources that may or may not be used by each customer's implementation. To prevent latch up and bus contention issues, the IO, both used and unused, may be placed in a known and steady state prior to the removal of power from the core fabric. The isolation circuitry 160 provides isolation outside the core fabric in the NOC 102, 206 that isolates all fabric to subsystem interfaces. Such isolation may be also applied to external IO. Each subsystem IP that drives external IO, will include IO sample and hold functionality enabling the user to set and maintain the output of a given IO to a known and steady state prior to the removal of power to the core fabric.

In some embodiments, the programmable logic device may provide a power management processor that users can program for the purposes of implementing respective power management schemes via firmware. The power management controller could additionally or alternatively be implemented in hardware (e.g. a power management FSM) internal to or external to the programmable logic device. In this example, the power management processor and firmware are external to the core fabric and resides in an always on power domain. The power management processor would contain power management firmware, configured by the user, to enable/disable the core fabric voltage in a monolithic package or core fabric voltage rails of individual FPGA die in a multi-die package based on functional requirements, telemetry, performance counter data, and/or other metrics.

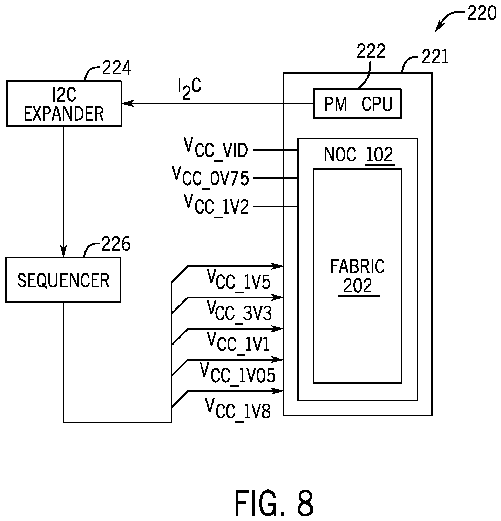

FIG. 8 shows a monolithic system 220 used to provide a core fabric power up and/or power down. The monolithic system 220 includes a monolithic die 221 used to implement the NOC 102 and the fabric 202. The monolithic die 221 includes a power management CPU/controller (PM CPU) 222. The PM CPU 222 sends a signal over an inter-integrated circuit (I2C) bus to an I2C expander 224. The I2C expander 224 expands the signal to a control signal to a sequencer 226 that is used to control which voltage levels are provided to the monolithic die 221 by respective voltage regulators.

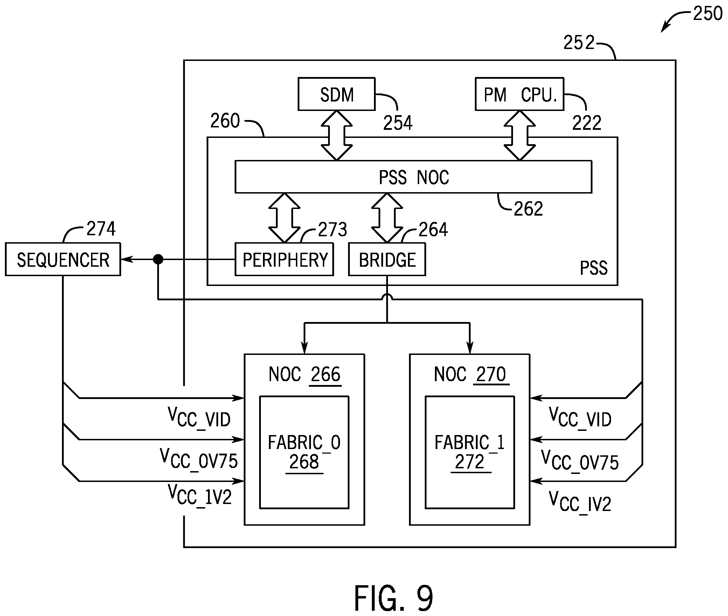

Multi-die dynamic core fabric power enablement/disablement can be provided via much the same mechanism used to dynamically power up and/or power down the core fabric described above in relation to FIG. 8. FIG. 9 is a block diagram of a system 250 that includes a package 252 that includes a NOC 266 and a fabric 268 on a first die and a NOC 270 and a fabric 272 on a second die. The package also includes the PM CPU 222 and a secure device manager (SDM) 254 that manages the package 252. The package 252 also includes a programmable supervisor for systems-on-chip (PSS) 260 that is coupled to the PM CPU 222 and the SDM 254. The PSS 260 includes a PSS NOC 262 that couples to a bridge 264 to communicate to the NOC 266 and the NOC 270 to enable communication to the fabrics 268 and 272. The PSS 260 also includes a periphery interface 273 used to communicate with an external sequencer 274 that is used to control which voltage levels are provided to the fabric dies by respective voltage regulators. Implementations may include each FPGA die in a multi die package having individual dedicated core fabric voltage rails that can be controlled independently for power management enablement/disablement capability or can be ganged and supplied by a single regulator if the customer does not want/need power management capability at the individual chip level.

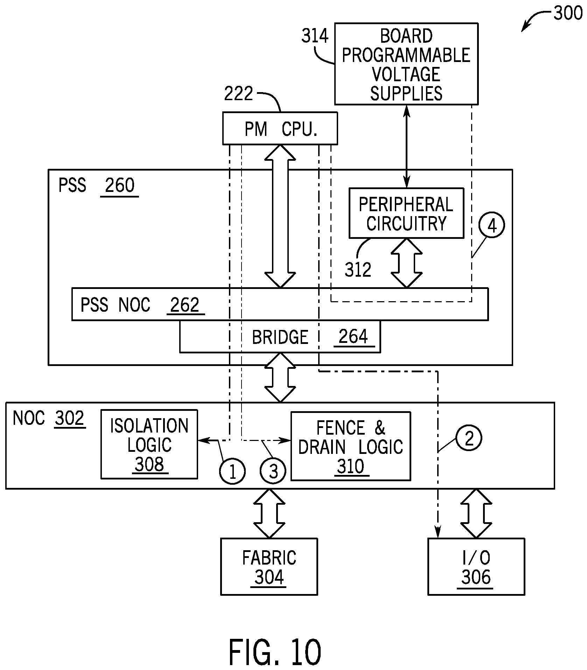

FIG. 10 is a block diagram of a system 300 that includes the PM CPU 222 and the PSS 260 with the PSS NOC 262 and the bridge 264. The system 300 includes a NOC 302 that is an embodiment of the NOCs 102, 206, 266, and/or 270. Specifically, the NOC 302 and its fabric 304 and/or I/Os 306 may be part of a monolithic die-based programmable logic device or a multi-die-based programmable logic device. The PM CPU 222 sends a command (command 1) to the NOC 302 to initiate the fence and drain process and isolation using isolation logic 308. The PM CPU 222 polls the isolation logic 308 (e.g., one or more registers of the quiescence circuitry 142) until all outstanding transactions are complete. If the NOC 302 times out due to a transaction not being completed, the PM CPU 222 can generate an error and provide an error information status.

The PM CPU 222 also initiates IO isolation by sending a command (command 2) to the I/O 308 to set the I/O sample and hold state to a specific value (e.g., 1) for when the core fabric supply is removed to prevent possibility of bus contention on a general-purpose I/O (GPIO). The PM CPU 222 also sends a command (command 3) to the NOC 302 (e.g., fence and drain logic 310) to initiate the interface isolation. Finally, the PM CPU 222 sends a command (command 4) via a peripheral interface 312 to board programmable voltage supplies 314. The board programmable voltage supplies 314 may include the sequencers 226 and 274 and/or their respective voltage regulators. The regulators can enable/disable core fabric supplies of the board programmable voltage supplies 314 to shutdown/startup the fabric. The NOC 302 may utilize different supplies and/or regulators of the board programmable voltage supplies 314 to perform transaction routing and maintain the status of all in-flight transactions separate from the power status of the fabric.

Along with telemetry data and/or other parameters, the flow described above can be queued. The user's power management firmware could provide functionality to support recovery and mitigation of thermal events and/or other events where a shutdown of the device or brown out of a particular portion may be warranted. When the PM CPU 222 is flagged that an event (e.g., thermal event) has occurred that potentially warrants a shutdown or brown out, the event can commence the transmission of warm reset commands to implemented subsystems. The implementation will be one where the hazard event may be delayed or mitigated through the coordinated and managed reduction of power in the implemented logic whereby the PM CPU 222 will afford the system time to complete outstanding transactions, flush caches return credits, etc. before the system is non-functional or is forced to reset/shutdown.

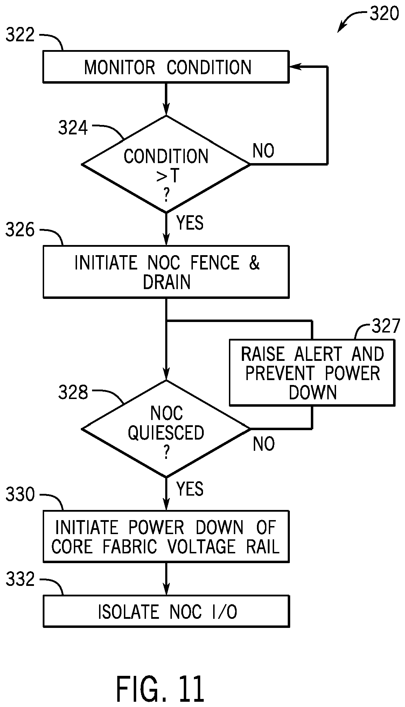

FIG. 11 is a flow diagram of a process 320 for performing an event-based power down (e.g., shutdown or brown out). Monitoring circuitry (e.g., the PM CPU 222, SDM 254, host device 18, and/or another controller/processor of the FPGA 70) monitors a condition of the FPGA 70 (block 322). For example, the condition may include one or more temperatures at one or more locations in the FPGA 70, power (e.g., voltage and/or current) consumption, power availability, and/or other conditions that may impact performance of the FPGA 70. When the condition exceeds a threshold (block 324), the PM CPU 222 initiates the NOC fence and drain (block 326), as previously discussed. If the NOC is not quiesced in an expected period of time, the PM CPU 222 and/or other circuitry may raise an alert and prevent a power down of the core fabric from occurring until the NOC is quiesced and/or the alert is removed (block 327).

Once the NOC is quiesced (block 328), the power down (e.g., shutdown or brown out) may be completed using a core fabric voltage rail (block 330). As previously discussed, this voltage rail may be an independently controllable voltage rail specific to the fabric. Before, during, or after the shutdown, the PM CPU 222 may cause the I/O of the NOC to be isolated (block 332). In some embodiments, this isolation may be automatic after quiescence of the NOC and/or may be available for a user to select after quiescence of the NOC. Indeed, initiation of the NOC fence and drain may be automated and/or based on user input. In certain embodiments, the NOC fence and drain functionality may be maintained for the core fabric and/or implemented logic until a fabric reconfiguration (partial or full) has been completed upon which a core fabric power up event is initiated. In some embodiments, the NOC fence and drain functionality may be delayed until the fabric and/or all implemented logic indicate that all cache/memory has been written back in support of memory coherency requirements. For instance, in some embodiments, the FPGA 70 or other programmable fabric device may be part of a compute express link (CXL) type 2 device that integrates an accelerator having implemented using a programmable fabric and has coherent access CPU/host memory and provides coherent and/or non-coherent access to the CPU/host to local device memory.

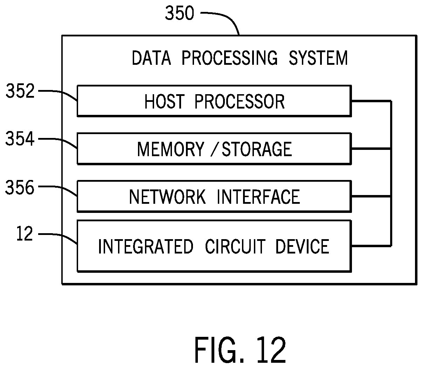

Bearing the foregoing in mind, the integrated circuit device 12 may be a component included in a data processing system, such as a data processing system 350, shown in FIG. 12. The data processing system 350 may include the integrated circuit device 12 (e.g., a programmable logic device), a host processor 352 (e.g., a processor), memory and/or storage circuitry 354, and a network interface 356. The data processing system 350 may include more or fewer components (e.g., electronic display, designer interface structures, ASICs). Moreover, any of the circuit components depicted in FIG. 12 may include integrated circuits (e.g., integrated circuit device 12). The host processor 352 may include any of the foregoing processors that may manage a data processing request for the data processing system 350 (e.g., to perform encryption, decryption, machine learning, video processing, voice recognition, image recognition, data compression, database search ranking, bioinformatics, network security pattern identification, spatial navigation, cryptocurrency operations, or the like). The memory and/or storage circuitry 354 may include random access memory (RAM), read-only memory (ROM), one or more hard drives, flash memory, or the like. The memory and/or storage circuitry 354 may hold data to be processed by the data processing system 350. In some cases, the memory and/or storage circuitry 354 may also store configuration programs (bit streams) for programming the integrated circuit device 12. The network interface 356 may allow the data processing system 350 to communicate with other electronic devices. The data processing system 350 may include several different packages or may be contained within a single package on a single package substrate. For example, components of the data processing system 350 may be located on several different packages at one location (e.g., a data center) or multiple locations. For instance, components of the data processing system 350 may be located in separate geographic locations or areas, such as cities, states, or countries.

In one example, the data processing system 350 may be part of a data center that processes a variety of different requests. For instance, the data processing system 350 may receive a data processing request via the network interface 356 to perform encryption, decryption, machine learning, video processing, voice recognition, image recognition, data compression, database search ranking, bioinformatics, network security pattern identification, spatial navigation, digital signal processing, or some other specialized task.

While the embodiments set forth in the present disclosure may be susceptible to various modifications and alternative forms, specific embodiments have been shown by way of example in the drawings and have been described in detail herein. However, it should be understood that the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

### Example Embodiments

EXAMPLE EMBODIMENT 1. An integrated circuit comprising:
a network-on-chip;
a core fabric coupled to the network-on-chip;
a voltage regulator configured to regulate a voltage rail to the core fabric; and
a power management processor that is configured to control whether power is provided to the core fabric from the voltage regulator via the voltage rail, wherein the power management processor is configured to fence and drain the network-on-chip by causing the network-on-chip to deliver in-flight transactions to and from the core fabric before a change in power provided to the core fabric via the voltage rail occurs.

EXAMPLE EMBODIMENT 2. The integrated circuit of example embodiment 1, wherein the voltage rail is independently controllable to only provide power to the core fabric.

EXAMPLE EMBODIMENT 3. The integrated circuit of example embodiment 1, wherein the fence and drain is configured to stop new transactions to and from the core fabric during and before the change in power.

EXAMPLE EMBODIMENT 4. The integrated circuit of example embodiment 3, wherein the change in power comprises a shutdown of the core fabric.

EXAMPLE EMBODIMENT 5. The integrated circuit of example embodiment 4, wherein the power management processor is configured to maintain the fence and drain until at least a portion of the core fabric is reconfigured.

EXAMPLE EMBODIMENT 6. The integrated circuit of example embodiment 5, wherein the reconfiguration of the core fabric may be a partial reconfiguration of a programmable fabric that includes the core fabric.

EXAMPLE EMBODIMENT 7. The integrated circuit of example embodiment 4, wherein the shutdown of the core fabric via the voltage rail does not impact voltage supplied to the network-on-chip that uses the supplied voltage to:
maintain a status of in-flight transactions; and
route transactions to and from other implementations in a programmable fabric that includes the core fabric.

EXAMPLE EMBODIMENT 8. The integrated circuit of example embodiment 3, wherein the change in power comprises a brown out of at least a portion of the core fabric.

EXAMPLE EMBODIMENT 9. The integrated circuit of example embodiment 1, wherein the power management processor is implemented using firmware in a programmable fabric that includes the core fabric.

EXAMPLE EMBODIMENT 10. The integrated circuit of example embodiment 1, comprising hardware processing circuitry, wherein the power management processor is implemented using the hardware processing circuitry.

EXAMPLE EMBODIMENT 11. The integrated circuit of example embodiment 1, wherein the power management processor is implemented using hardware processing circuitry external to the integrated circuit.

EXAMPLE EMBODIMENT 12. The integrated circuit of example embodiment 1, wherein the power management processor is configured to delay the change in power until other logic implementations in a programmable fabric that includes the core fabric are quiesced.

EXAMPLE EMBODIMENT 13. The integrate circuit of example embodiment 12, comprising:
an input/output interface; and
isolation circuitry that is configured to isolate the programmable fabric and the input/output interface after quiescence of the other logic implementations.

EXAMPLE EMBODIMENT 14. A method comprising:
monitoring, using monitoring circuitry, a condition of a programmable logic device;
determining, using the monitoring circuitry, that the condition has exceeded a corresponding threshold;
in response to determining that the condition has exceeded the corresponding threshold, causing fencing and draining of a network-on-chip of the programmable logic device by causing in-flight transactions to be delivered and stopping new transactions from entering the network-on-chip;
determining, using a power management processor, that the network-on-chip has been quiesced; and
in response to the determination of quiescence of the network-on-chip, powering down supply of power to a core fabric of the programmable logic device.

EXAMPLE EMBODIMENT 15. The method of example embodiment 14, wherein the condition comprises a temperature of at least a portion of the programmable logic device.

EXAMPLE EMBODIMENT 16. The method of example embodiment 14, wherein the monitoring circuitry comprises the power management processor.

EXAMPLE EMBODIMENT 17. The method of example embodiment 14, comprising, in response to the determination of the quiescence of the network-on-chip, isolating an input/output interface of the network-on-chip.

EXAMPLE EMBODIMENT 18. A system comprising:
a network-on-chip of a programmable logic device;
a core fabric in a programmable fabric of the programmable logic device, wherein the core fabric is coupled to the network-on-chip;
a voltage regulator configured to regulate power to the core fabric; and
a power management processor that is configured to:
   determine that a power change is to occur;
   in response to determining that the power change is to occur, cause fencing and draining of the network-on-chip by causing in-flight transactions to be delivered and stopping new transactions from entering the network-on-chip;
   determine whether the network-on-chip has been quiesced; and
   when quiescence of the network-on-chip has been determined to have occurred, power down supply of power to the core fabric of the programmable logic device using the voltage regulator to effect the power change.

EXAMPLE EMBODIMENT 19. The system of example embodiment 18, wherein the power management processor is configured to, when the quiescence of the network-on-chip has not been determined to have occurred:
raise an alert that quiescence has not occurred within an expected period of time; and
prevent the power down of the supply of power until quiescence has occurred or the alert has been removed.

EXAMPLE EMBODIMENT 20. The system of example embodiment 18, wherein the programmable fabric maintains memory coherency, and the power management processor delays fencing and draining the network-on-chip until cache/memory dirty entries have been written back.

## Claims

1. An integrated circuit comprising:
a network-on-chip;
a core fabric coupled to the network-on-chip;
a voltage regulator configured to regulate a voltage rail to the core fabric; and
a power management processor that is configured to control whether power is provided to the core fabric from the voltage regulator via the voltage rail, wherein the power management processor is configured to fence and drain the network-on-chip by causing the network-on-chip to deliver in-flight transactions to and from the core fabric before a change in power provided to the core fabric via the voltage rail occurs.

2. The integrated circuit of claim 1,
wherein the voltage rail is independently controllable to only provide power to the core fabric.

3. The integrated circuit of claim 1 or 2,
wherein the fence and drain is configured to stop new transactions to and from the core fabric during and before the change in power.

4. The integrated circuit of claim 3,
wherein the change in power comprises a shutdown of the core fabric.

5. The integrated circuit of claim 4,
wherein the power management processor is configured to maintain the fence and drain until at least a portion of the core fabric is reconfigured.

6. The integrated circuit of claim 5,
wherein the reconfiguration of the core fabric may be a partial reconfiguration of a programmable fabric that includes the core fabric.

7. The integrated circuit of claim 4,
wherein the shutdown of the core fabric via the voltage rail does not impact voltage supplied to the network-on-chip that uses the supplied voltage to:
maintain a status of in-flight transactions; and
route transactions to and from other implementations in a programmable fabric that includes the core fabric.

8. The integrated circuit of claim 3,
wherein the change in power comprises a brown out of at least a portion of the core fabric.

9. The integrated circuit of any of the preceding claims,
wherein the power management processor is implemented using firmware in a programmable fabric that includes the core fabric.

10. The integrated circuit of any of the preceding claims,
further comprising hardware processing circuitry, wherein the power management processor is implemented using the hardware processing circuitry.

11. The integrated circuit of any of the preceding claims,
wherein the power management processor is implemented using hardware processing circuitry external to the integrated circuit.

12. The integrated circuit of any of the preceding claims,
wherein the power management processor is configured to delay the change in power until other logic implementations in a programmable fabric that includes the core fabric are quiesced.

13. The integrated circuit of claim 12, further comprising:
an input/output interface; and
isolation circuitry that is configured to isolate the programmable fabric and the input/output interface after quiescence of the other logic implementations.

14. A method comprising:
monitoring, using monitoring circuitry, a condition of a programmable logic device;
determining, using the monitoring circuitry, that the condition has exceeded a corresponding threshold;
in response to determining that the condition has exceeded the corresponding threshold, causing fencing and draining of a network-on-chip of the programmable logic device by causing in-flight transactions to be delivered and stopping new transactions from entering the network-on-chip;
determining, using a power management processor, that the network-on-chip has been quiesced; and
in response to the determination of quiescence of the network-on-chip, powering down supply of power to a core fabric of the programmable logic device.

15. The method of claim 14,
further comprising, in response to the determination of the quiescence of the network-on-chip, isolating an input/output interface of the network-on-chip.
